# EUROPÄISCHE PATENTSCHRIFT

(11) **EP 1 865 589 B1**
(45) Veröffentlichungstag und Bekanntmachung des Hinweises auf die Patenterteilung: **08.07.2015**
(21) Anmeldenummer: 07010838.6
(22) Anmeldetag: 01.06.2007
(51) Int. Cl.: H02K 5/15, H02K 11/00

(54) **Statoreinheit für einen Elektromotor**
Stator unit for an electrical motor
Ensemble de stator pour un moteur électrique

(30) Priorität: 07.06.2006 DE 202006008934 U
(43) Veröffentlichungstag der Anmeldung: 12.12.2007
(73) Patentinhaber: Lenze Drive Systems GmbH, 31855 Aerzen (DE)
(72) Erfinder: Fräger, Carsten Dr.Ing., 31787 Hameln (DE); Hilfert, Sven, 31855 Aerzen (DE); Scholze,Angela, 31789 Hameln (DE)
(74) Vertreter: Schober, Mirko

(56) Entgegenhaltungen:
- AT-B- 390 531
- US-A- 6 088 905

## Beschreibung

Die Erfindung bezieht sich auf eine Statoreinheit für einen Elektromotor mit einem lamellierten Stator-Blechpaket, welches aus isolierten, mechanisch und elektrisch miteinander verknüpften Blechen besteht. Ferner weist die Statoreinheit stirnseitig an das Blechpaket angesetzte Lagerschilde auf, die mit einem Schutzleiteranschluß versehen sind.

Bei elektrischen Betriebsmitteln der vorgenannten Art ist eine gut leitende Verbindung zwischen dem Schutzleiteranschluß und allen metallischen Teilen erforderlich, die berührt werden können und die nicht durch eine verstärkte Isolation von gefährlicher Spannung getrennt sind. Bei Elektromotoren betrifft dies alle Gehäuseteile. Übernimmt das magnetisch aktive Stator-Blech-paket auch die Gehäusefunktion im Bereich zwischen den Lagerschilden, handelt es sich bei dem betreffenden Elektromotor um einen sogenannten gehäuselosen Motor, bei dem auch das Stator-Blechpaket in die Verbindung mit dem Schutzleiter einbezogen werden muß.

Dazu ist es aus dem Dokument DE 200 21 796 U1 bekannt, am Stator ein mit dem Schutzleiter zu verbindendes Leiterstück vorzusehen, also ein separates Bauteil, welches für sich hergestellt und am Motor montiert werden muß.

Aus dem Dokument DE 198 58 208 A1 ist ein Schutzleiteranschluß an einem lamellierten Ständerblechpaket eines Elektromotors bekannt, bei dem eine der beiden stirnseitigen Blechlamellen eine eingestanzte Erdungszunge aufweist. An dieser Erdungszunge ist der Schutzleiter fest anschließbar.

Die US 6,088,905 A beschreibt eine gattungsgemäße Statoreinheit, die aus zwei Lagerschilden und einem dazwischen angeordneten Blechpaket gebildet ist. Die Teile werden durch die Lagerschilde und das Blechpaket überspannende mechanische Klemmen zusammengehalten.

Der Erfindung liegt die Aufgabe zugrunde, eine Statoreinheit für einen Elektromotor der eingangs genannten Art zu schaffen, bei dem ein einfacher und sicherer Schutzleiteranschluß am Stator-Blechpaket besteht.

Diese Aufgabe wird bei einer Statoreinheit der genannten Art dadurch gelöst, daß die Bleche des Blechpakets eingestanzte, miteinander fluchtende Bohrungen aufweisen, die achsparallele Durchgangsbohrungen am Blechpaket ergeben. Ferner gehört dazu, daß an zumindest einem der Lagerschilde mit diesen Durchgangsbohrungen koaxiale Zapfen angeformt sind, deren Durchmesser ein Übermaß relativ zu dem der Durchgangsbohrungen aufweist und die in die Durchgangsbohrungen des Blechpakets eingepreßt sind.

Für die Erfindung ist wesentlich, daß die Schutzleiterverbindung des Stator-Blechpakets mit einem geringen Aufwand realisiert ist. So sind die am Blechpaket montierten Lagerschilde, von denen eines auch als Anschlußflansch ausgebildet sein kann, vorzugsweise als Gußteile ausgeführt, und es können die daran vorstehenden Zapfen sogleich beim Gießen des Rohteils mit angeformt werden. Beim Fügen der Lagerschilde und des Blechpakets zur kompletten Statoreinheit pressen sich die Zapfen in die Durchgangsbohrungen des Blechpakets ein und stellen aufgrund ihres Über-maßes eine innige, elektrisch gut leitende Verbindung zum Blechpaket her. Hierbei wird die auf den Blechen des Blechpakets aufgebrachte Isolierschicht wirksam überbrückt, und es wird durch die Gestaltung der Zapfen eine große Kontaktfläche geschaffen, die über das betreffende Lagerschild, welches mit dem Schutzleiter des Elektromotoranschlusses verbunden ist, einen sicheren Schutzleiteranschluß des Stator-Blechpakets gewährleistet.

Vorteilhafte Ausgestaltungsmerkmale der Erfindung ergeben sich aus den Unteransprüchen.

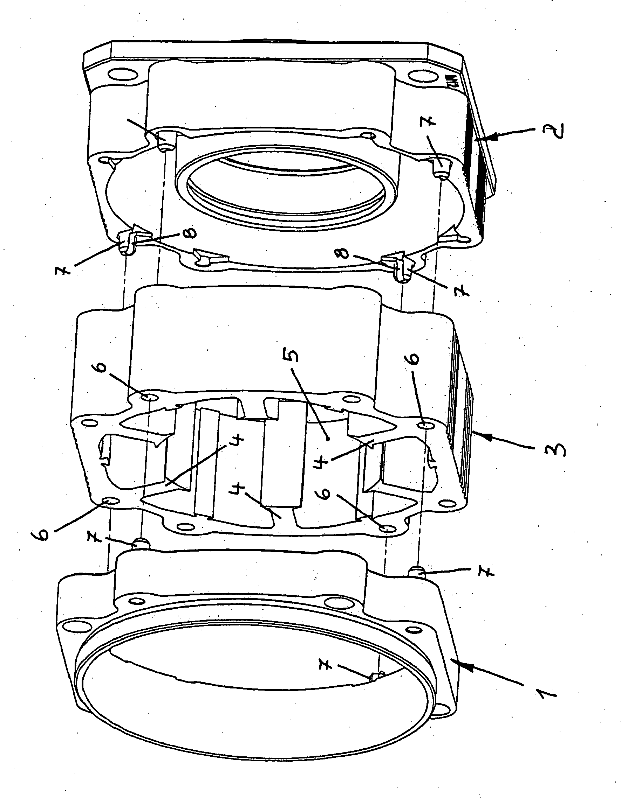

Die Erfindung wird nachfolgend anhand der Zeichnung an einem Ausführungsbeispiel näher erläutert.

Die Zeichnung zeigt eine Statoreinheit für einen Elektromotor in gesprengter, perspektivischer Wiedergabe.

Im einzelnen zeigt die Zeichnung ein erstes Lagerschild 1, welches als Anschlußflansch für einen sogenannten gehäuselosen Elektromotor ausgeführt ist. Weiter umfaßt die Statoreinheit ein zweites Lagerschild 2, zwischen dem und dem ersten Lagerschild 1 ein Stator-Blechpaket 3 eingefügt wird, welches in der zusammengefügten Anordnung zwischen den beiden Lagerschilden 1, 2 verspannt ist.

Das Blechpaket 3 besteht aus einer Vielzahl von miteinander gleichen Blechlamellen, die durch Stanzen hergestellt werden und die zu dem Blechpaket 3 deckungsgleich aufgeschichtet werden. Die geschichteten an ihren aneinander anliegenden Seiten gegeneinander isolierten Blechlamellen werden mechanisch und elek-trisch mit einander verknüpft, und es ergibt sich aufgrund der äußeren Ringform der Blechlamellen beim Stator-Blechpaket 3 ein äußerer Jochbereich 5 mit daran radial nach innen hin vorstehenden Polen 4.

Beim Stanzen der Blechlamellen werden zusätzliche Löcher vorgesehen, die beim gefügten Blechpaket 3 mit der Motorachse koaxiale Durchgangsbohrungen 6 in den Jochbereich 5 ergeben.

An den inneren Stirnseiten der Lagerschilde 1, 2, die in der zusammengefügten Anordnung der Statoreinheit am Blechpaket 3 anliegen, sind vorstehende Zapfen 7 angeformt. Diese Zapfen 7 sind so angeordnet, daß sie koaxial mit den Durchgangsbohrungen 6 im Blechpaket 3 ausgerichtet werden und beim Zusammenfügen der Statoreinheit in die Durchgangsbohrungen 6 eingepreßt werden können. Im eingepreßten Zustand stehen die Zapfen 7 an den Lagerschilden 1, 2 im metallischen Kontakt mit den Blechlamellen des Blechpakets 3. Da die Lagerschilde 1, 2 in der fertig montierten Anordnung mit dem Schutzleiter der Motoranschlußleitung verbunden sind, besteht über die Zapfen 7 somit auch ein Schutzleiteranschluß für das Blechpaket 3.

Besonders hilfreich ist nicht nur das Übermaß des Aussendurchmessers der Zapfen 7 an den Lagerschilden 1, 2 in Relation zum Innendurchmesser der Durchgangsbohrungen 6 am Blechpaket 3 sondern auch eine elastische Ausführung der Zapfen 7, um deren elektrischen Kontakt zum Blechpaket 3 im darin eingepreßten Zustand aufrechtzuerhalten. Zweckmäßig führt man dazu die Zapfen 7 an den Lagerschilden 1, 2 hohl aus und sieht eine längsseitige Öffnung 8 an den Zapfen 7 vor, die dadurch im Querschnitt C-förmig sind.

## Patentansprüche

1. Statoreinheit für einen Elektromotor mit einem lamellierten Stator-Blechpaket, welches aus isolierten, mechanisch und elektrisch miteinander verknüpften Blechen besteht, und mit stirnseitig an das Blechpaket angesetzten Lagerschilden, die mit einem Schutzleiteranschluß versehen sind, wobei die Bleche des Blechpakets (3) eingestanzte, miteinander fluchtende Bohrungen aufweisen, die achsparallele Durchgangsbohrungen (6) am Blechpaket (3) ergeben, und wobei an zumindest einem der Lagerschilde (1, 2) mit diesen Durchgangsbohrungen (6) koaxiale Zapfen (7) angeformt sind,
**dadurch gekennzeichnet,**
**dass** der Durchmesser der Zapfen (7) ein Übermaß relativ zu dem der Durchgangsbohrungen (6) aufweist und die in die Durchgangsbohrungen (6) des Blechpakets (3) eingepreßt sind, um eine innige elektrisch gut leitende Verbindung zum Blechpaket herzustellen.

2. Statoreinheit nach Anspruch 1,
**dadurch gekennzeichnet,**
**dass** die Zapfen (7) an dem betreffenden Lagerschild (1, 2) elastisch ausgebildet sind.

3. Statoreinheit nach Anspruch 2,
**dadurch gekennzeichnet,**
**dass** die Zapfen (7) an dem betreffenden Lagerschild (1, 2) hohl ausgeführt sind.

4. Statoreinheit nach Anspruch 3,
**dadurch gekennzeichnet,**
**dass** die Zapfen (7) an dem betreffenden Lagerschild (1, 2) eine längsseitige Öffnung (8) aufweisen und demgemäß im Querschnitt C-förmig sind.

5. Statoreinheit nach einem der Ansprüche 1 - 4,
**dadurch gekennzeichnet,**
**dass** die Durchgangsbohrungen (6) im Jochbereich (5) des Blechpakets (3) angeordnet sind.

## Claims

1. Stator unit for an electric motor with a laminated stack of sheets, consisting of insulated sheets that are mechanically and electrically interconnected, and with end shields arranged at the end side of the stack of sheets, which end shields are provided with a protective earth terminal, wherein the sheets of the stack of sheets (3) have stamped bores aligned with each other that produce axis-parallel through-bores (6) on the stack of sheets (3), and wherein coaxial pin elements (7) are formed on at least one of the end shields (1, 2) with these through-bores (6),
**characterised in that**
the diameter of the pin elements (7) has an excess relative to that of the through-bores (6) and they are pressed into the through-bores (6) of the stack of sheets (3) in order to produce a good inner electrically conductive connection to the stack of sheets.

2. Stator unit according to claim 1,
**characterised in that**
the pin elements (7) are elastically formed on the respective end shield (1, 2).

3. Stator unit according to claim 2,
**characterised in that**
the pin elements (7) are designed to be hollow on the respective end shield (1, 2).

4. Stator unit according to claim 3,
**characterised in that**
the pin elements (7) have on the respective end shield (1, 2) a longitudinal opening (8) and accordingly have a C-shaped cross-section.

5. Stator unit according to one of claims 1 - 4,
**characterised in that**
the through-bores (6) are arranged in the yoke area (5) of the stack of sheets (3).

## Revendications

1. Unité de stator pour un moteur électrique qui comprend un paquet de tôles lamellé, qui est formé de tôles reliées ensemble mécaniquement et électriquement, et des flasques, qui, rattachés, côté frontal, au paquet de tôles, sont pourvus d'une borne pour conducteur de protection, sachant que les tôles du paquet de tôles (3) présentent des alésages, qui, estampés en alignement les uns par rapport aux autres, forment sur le paquet de tôles (3) des alésages de passage (6) à axe parallèle, et sachant que des ergots (7), disposés coaxialement par rapport à ces alésages de passage (6) sont formés sur au moins l'un des flasques (1, 2),
**caractérisée en ce que**
les ergots (7) présentent un diamètre surdimensionné par rapport à celui des alésages de passage (6) et qu'ils sont pressés dans les alésages de passage (6) pour établir une étroite liaison électrique, bien conductible avec le paquet de tôles (3).

2. Unité de stator selon la revendication 1,
**caractérisée en ce que**
les ergots (7), formés sur le flasque concerné (1, 2), sont de conception élastique.

3. Unité de stator selon revendication 2,
**caractérisée en ce que**
les ergots (7), formés sur le flasque concerné (1, 2), sont de conception creuse.

4. Unité de stator selon la revendication 3,
**caractérisée en ce que**
les ergots (7), sur le flasque (1, 2) concerné, sont pourvus d'une ouverture longitudinale (8) et présentent ainsi une section transversale en forme de C.

5. Unité de stator selon l'une des revendications 1 à 4,
**caractérisée en ce que**
les alésage de passage (6) sont disposés dans la région de la culasse (5) du paquet de tôles (3).
